# EUROPÄISCHE PATENTANMELDUNG

(11) **EP 4 686 676 A1**
(43) Veröffentlichungstag der Anmeldung: **04.02.2026**
(21) Anmeldenummer: 25192679.6
(22) Anmeldetag: 30.07.2025
(51) Int. Cl.: B65G 47/84

(54) **VORRICHTUNG ZUM TRANSPORTIEREN MINDESTENS EINES BEHÄLTERS UND BEHÄLTERBEHANDLUNGSVORRICHTUNG**

(30) Priorität: 30.07.2024 DE 102024121632
(71) Anmelder: KRONES AG, 93073 Neutraubling (DE)
(72) Erfinder: Schiller, Georg, 93073 Neutraubling (DE)
(74) Vertreter: Nordmeyer, Philipp Werner

(57) **Zusammenfassung**

Die vorliegende Erfindung betrifft eine Vorrichtung (1) zum Transportieren mindestens eines Behälters (5), beispielsweise zum Transportieren von Behältern (5) in einer Getränkeabfüllanlage (200), umfassend einen rotierenden Transportstern (10) mit Transporttaschen (11) zum Transportieren des mindestens einen Behälters (5), wobei der rotierende Transportstern (11) zumindest eine relativ zu einer Transporttasche (11) bewegbare Führungseinheit (20) umfasst, welche den Behälter (5) gemeinsam mit den Transporttaschen (11) in einer Führungsposition hält und welche in einer Freigabeposition den Behälter (5) freigibt, wobei die Führungsposition und die Freigabeposition in Richtung einer Drehachse (12) des Transportsterns (10) voneinander beabstandet sind; sie betrifft ferner eine Behälterbehandlungsvorrichtung (100), die Behälter (5) beispielsweise in einer Getränkeabfüllanlage (200) behandelt.

## Beschreibung

### Technisches Gebiet

Die vorliegende Erfindung betrifft eine Vorrichtung zum Transportieren mindestens eines Behälters, beispielsweise zum Transportieren von Behältern in einer Getränkeabfüllanlage, und eine Behälterbehandlungsvorrichtung, die beispielsweise zum Füllen und/oder Verschließen eines Behälters oder zum Ausrichten von Behältern ausgebildet ist.

### Stand der Technik

Im Bereich der Getränkeabfüllanlagen, insbesondere bei Anlagen, die PET-Flaschen befüllen, ist es üblich, Behälterbehandlungsvorrichtungen in Rundläuferbauweise auszubilden. Diese weisen einen um eine Drehachse rotierenden Transportstern auf, an dessen Umfang mit gleichmäßiger Teilung voneinander beabstandet Transporttaschen zur Aufnahme je eines Behälters angeordnet sind. Die Behälter werden entlang eines Transportpfads der Anlage von einem Transportstern an den nächsten übergeben.

Bei herkömmlichen Vorrichtungen aus dem Stand der Technik wurden die Behälter beziehungsweise Flaschen über den radial innen liegenden, rotierenden Transportstern und einer radial außen angeordneten, ortsfesten Führungskurve, beziehungsweise synonym auch Führungsbogen genannt, geführt transportiert.

Bei Behältern mit kreisrunder Profilform, also beispielsweise Behälter, die in Bezug auf ihre Längsachse rotationssymmetrisch ausgebildet sind, kann durch diesen herkömmlichen Aufbau ein sicherer und zuverlässiger Transport erzielt werden.

Bei Behälter mit unrunder Profilform, also Behältern, bei denen die Außenkontur des Querschnittprofils senkrecht zur Längsachse nicht kreisrund und/oder rotationssymmetrisch ist, beispielsweise Formflaschen mit im Wesentlichen quadratischer Profilform, kann je nach Ausrichtung beziehungsweise Winkelposition des Behälters in Bezug auf seine Längsdachse eine Lücke an der äußeren Führungskurve vorliegen. Durch diese Lücke kann die Führung des Behälters spielbehaftet sein. Zudem kann es sein, dass auch bei stellungsgerechter Verarbeitung der Behälter der in der Transporttasche geführte Behältern nur mäßig gegen ein Verdrehen gesichert werden kann. Insbesondere bei Verschließern, in welchen befüllte Behälter mit einem Behälterverschluss, etwa einem Schraubverschluss, versehen werden, kann es vorkommen, dass durch herkömmliche Vorrichtungen allein keine ausreichende Verdrehsicherung erzielt werden kann. Entsprechend kann es sein, dass ein Bremsbackenstern und/oder eine Riemenklemmung erforderlich sind.

Bei herkömmlichen Ausrichtsternen werden Formbehälter über gefederte Parallelogramme, die ausgebildet sind durch einen segmentierten Innenführungsbogen und einen segmentierten Außenführungsbogen, ausgerichtet. Durch den via der gefederten Parallelogramme auf den Behälter erzeugen Widerstand kann es vorkommen, dass ein in einer Transporttasche geförderter Behälter gegen die Laufrichtung schräggestellt wird, seine Längsachse also nicht mehr senkrecht zur Transportrichtung beziehungsweise Laufrichtung orientiert ist. Hierdurch kann es vorkommen, dass sich eine Ecke des Behälters an der Transporttasche verhakt.

Um den entgegenzuwirken, sind Vorrichtungen bekannt, bei welchen die Behälter an ihrem Bauchbereich aktiv gegriffen werden, wie aus der US 4,124,112 A oder der EP 1 281 644 A1 zu entnehmen.

### Darstellung der Erfindung

Ausgehend von dem bekannten Stand der Technik ist es eine Aufgabe der vorliegenden Erfindung, eine verbesserte Vorrichtung zum Transportieren mindestens eines Behälters, beispielsweise zum Transportieren von Behältern in einer Getränkeabfüllanlage, sowie eine Behälterbehandlungsvorrichtung bereitzustellen.

Die Aufgabe wird durch eine Vorrichtung zum Transportieren mindestens eines Behälters, beispielsweise zum Transportieren von Behältern in einer Getränkeabfüllanlage, mit den Merkmalen des Anspruchs 1 gelöst. Vorteilhafte Weiterbildungen ergeben sich aus den Unteransprüchen, der Beschreibung und den Figuren.

Entsprechend wird eine Vorrichtung zum Transportieren mindestens eines Behälters, beispielsweise zum Transportieren von Behältern in einer Getränkeabfüllanlage, vorgeschlagen, umfassend einen rotierenden Transportstern mit Transporttaschen zum Transportieren des mindestens einen Behälters.

Der rotierende Transportstern umfasst eine relativ zu einer Transporttasche bewegbare Führungseinheit, welche den Behälter gemeinsam mit der Transporttasche in einer Führungsposition hält und welche in einer Freigabeposition den Behälter freigibt, wobei die Führungsposition und die Freigabeposition in Richtung einer Drehachse des Transportsterns voneinander beabstandet sind.

Mit anderen Worten liegen die Führungsposition und die Freigabeposition in Richtung der Drehachse übereinander und soweit voneinander beabstandet, dass der Behälter in der Führungsposition mit der Führungseinheit in Eingriff steht und in der Freigabeposition außer Eingriff mit der Führungseinheit steht.

Die Führungseinheit kann schwenkbar an dem Transportstern angeordnet sein. Durch die schwenkbare Anordnung kann die Führungseinheit von der Führungsposition in die Freigabeposition (und wieder zurück) geschwenkt werden. Die Führungseinheit bewegt sich bei der Schwenkbewegung entsprechend in Richtung der Drehachse des Transportsterns.

Gemäß einer Ausführungsform kann die Führungseinheit in der Führungsposition den Behälter zumindest in einem Umfangsbereich von mehr als 180° umfassen beziehungsweise synonym umgreifen, optional mehr als 270°, oder den Behälter vollständig umschlingen. Dadurch kann verhindert werden, dass der Behälter sich seitlich, mithin radial zu dessen Längsachse aus der Führungseinheit herausbewegen kann.

Gemäß einer Ausführungsform kann die Führungseinheit einen Haltering umfassen, der eingerichtet ist, in der Führungsposition den Behälter zumindest teilweise seitlich zu umgreifen, wobei der Haltering, spezifischer seine Innenkontur, optional korrespondierend zu einer Profilform für zumindest einen Typ an zu fördernden Behältern ausgebildet ist.

Unter "Profilform" wird in diesem Dokument die Außenkontur eines Querschnitts des Behälters senkrecht zu seiner Längsrichtung beziehungsweise Längsachse verstanden.

Der Haltering kann sich in Umfangsrichtung zumindest in einem Umfangsbereich von mehr als 180° erstrecken, optional mehr als 270°, oder durchgehend ausgebildet sein.

Gemäß einer Ausführungsform kann die Führungseinheit zum Halten des Behälters in der Führungsposition an einer unteren Seite des Behälters ausgebildet sein.

Gemäß einer Ausführungsform kann die Führungseinheit in der Führungsposition in Bezug auf eine vorgesehene Einbaulage der Vorrichtung ein höheres Höhenniveau aufweisen als in der Freigabeposition. Die Führungsposition stellt mithin eine angehobene Stellung und die Freigabeposition eine abgesenkte Stellung dar. Anders ausgedrückt kann die Führungseinheit zwischen einer angehobenen Führungsposition und einer abgesenkten Freigabeposition bewegbar sein. Dies hat sich als besonders vorteilhaft herausgestellt, wenn der Behälter in der Transporttasche an einer oberen Seite, beispielsweise an seinem Halsbereich, beispielsweise durch eine Haltevorrichtung wie eine Klammervorrichtung, gehalten ist und/oder die untere Seite des Behälters im Wesentlichen frei ist.

Als in der Führungsposition "halten" wird in diesem Dokument verstanden, dass ein Verschieben aus seiner vorgesehenen Lage und/oder ein Schwenken oder Kippen des gehaltenen Behälters aus seiner vorgesehenen Lage in Bezug auf seine Längsrichtung verhindert ist. Mit anderen Worten hindert die Führungseinheit durch das Halten den Behälter daran, die Position und die Orientierung der Längsrichtung beziehungsweise Längsachse des Behälters zu verändern, insbesondere einen anderen Winkel im Raum einzunehmen. Vorteilhafterweise bedingt das "Halten" in der Führungsposition, dass die Längsrichtung beziehungsweise Längsachse des Behälters im Wesentlichen parallel zur Drehachse des Transportsterns und/oder zur Gravitationsrichtung im Wesentlichen fixiert ist. Das Halten in der Führungsposition erfolgt, indem die Führungseinheit in direktem physischen Kontakt mit dem Behälter steht.

Die Führungseinheit ist mithin optional eingerichtet, in der vorteilhafterweise angehobenen Führungsposition den Behälter, beispielsweise einen Stützbereich an der unteren Seite des Behälters, in einer vorgegebenen Position zu positionieren und ein Versetzen des Stützbereichs senkrecht zur Längsrichtung beziehungsweise Längsachse des Behälters beziehungsweise senkrecht zur Drehachse zu verhindern. Die Führungseinheit geht dabei im Stützbereich einen Formschluss mit zumindest einer Wand des Behälters senkrecht zur Drehachse beziehungsweise zur Längsrichtung beziehungsweise Längsachse des Behälters ein.

Die Führungseinheit kann vorteilhafterweise eingerichtet sein, den Behälter in mindestens drei Radialrichtungen mit voneinander unterschiedlichen Winkelpositionen in Bezug auf die Umfangsrichtung zu stützen, wobei der durch die drei Radialrichtungen eingeschlossene Stützwinkel in Umfangsrichtung größer 180° sein kann. Die Winkel in Umfangsrichtung zwischen zwei benachbarten Radialrichtungen sollten dann jeweils kleiner 180° sein.

Gemäß einer Ausführungsform kann die Führungseinheit einen sich in Richtung der Drehachse erstreckenden Nocken umfassen, der eingerichtet ist, in der Führungsposition in eine Einbuchtung an der Unterseite des Behälters einzugreifen, um so den Behälter zu halten, wobei der Nocken optional korrespondierend zu einer Form der Einbuchtung für zumindest einen Typ an zu fördernden Behältern ausgebildet ist.

Gemäß einer Ausführungsform kann die Führungseinheit am Transportstern schwenkbar angeordnet sein. Alternativ oder zusätzlich kann die Führungseinheit am Transportstern verschiebbar angeordnet sein.

Gemäß einer Ausführungsform kann die Führungseinheit einen Rastmechanismus zum Fixieren der Führungseinheit in der Führungsposition umfassen, wobei der Rastmechanismus ein Rastelement, beispielsweise einen Rasthaken oder Rastbolzen, zum Eingehen eines Formschlusses umfassen kann, wobei das Rastelement optional in Richtung einer Rastposition vorgespannt ist, beispielweise über eine Feder oder ein Magnetelement. Alternativ oder zusätzlich kann der Rastmechanismus ein Magnetelement zum Fixieren der Führungseinheit in der Führungsposition umfassen.

Gemäß einer Ausführungsform kann der Rastmechanismus eingerichtet sein, durch Wechselwirkung mit einem Löseteil gelöst zu werden, wobei durch Lösen des Rastmechanismus die Führungseinheit aus der Führungsposition in die Freigabeposition bewegbar ist, beispielsweise bedingt und/oder unterstützt durch die Gravitationskraft.

Gemäß einer Ausführungsform kann die Führungseinheit ein Vorspannteil zum Vorspannen der Führungseinheit in eine vorgegebene Position, beispielsweise in die Führungsposition oder die Freigabeposition, umfassen.

Die Führungseinheit kann alternativ oder zusätzlich auf einem Teilbereich des Umfangs des Transportsterns geführt sein. Sie kann auch um den gesamten Umfang herum geführt sein. Beispielsweise kann eine über den Teilbereich oder den gesamten Umfang herum umlaufende Führungskurve vorgesehen sein, die mit einem an der Führungseinheit angeordneten Element, beispielsweise einem Gleitelement oder einer Rolle, bei Rotation der Führungseinheit im Bereich der Führungskurve in Eingriff gelangen kann. Die Position der Führungseinheit kann mithin durch die Form der Führungskurve, über welche das Element gleitet beziehungsweise abrollt, vorgegeben werden. Durch eine Anhebung oder eine Absenkung der Führungskurve entlang der Drehachse des Transportsterns können die beiden Positionen der Führungseinheit angefahren werden.

Gemäß einer Ausführungsform kann der Transportstern Haltevorrichtungen zum Halten eines zu transportierenden Behälters an einer oberen Seite des Behälters, beispielsweise an seinem Halsbereich, umfassen, wobei optional je eine Haltevorrichtung je einer Transporttasche zugeordnet ist.

Die oben gestellte Aufgabe wird weiterhin durch eine Behälterbehandlungsvorrichtung mit den Merkmalen des Anspruchs 14 gelöst. Vorteilhafte Weiterbildungen ergeben sich aus dem Unteranspruch, der vorliegenden Beschreibung und den Figuren.

Entsprechend wird eine Behälterbehandlungsvorrichtung, beispielsweise in einer Abfüllanlage, beispielsweise einer Getränkeabfüllanlage, vorgeschlagen, umfassend zumindest eine Behälterbehandlungseinheit und eine Vorrichtung gemäß einem der vorstehenden Ansprüche.

Gemäß einer Ausführungsform kann zumindest eine Behälterbehandlungseinheit zum Füllen und/oder Verschließen eines Behälters ausgebildet sein oder die Behälterbehandlungseinheit zum Ausrichten der Behälter in eine vorgegebene Position um ihre Längsrichtung ausgebildet sein.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch eine perspektivische Seitenansicht auf einen Teilbereich einer Vorrichtung zum Transportieren mindestens eines Behälters;
- Figur 2: schematisch eine weitere perspektivische Ansicht auf den Teilbereich aus Figur 1;
- Figur 3: schematisch eine perspektivische Seitenansicht auf einen Teilbereich der Vorrichtung aus Figur 1 und 2;
- Figur 4: schematisch eine Draufsicht auf einen Teil einer Getränkeabfüllanlage, in der die Vorrichtung gemäß der Figuren 1-3 verbaut ist;
- Figur 5: schematisch eine perspektivische Seitenansicht auf eine Vorrichtung gemäß einer weiteren Ausführungsform;
- Figur 6: schematisch eine perspektivische Seitenansicht auf eine Vorrichtung gemäß einer weiteren Ausführungsform;
- Figur 7: schematisch eine Draufsicht in Richtung der Drehachse eines Transportsterns auf einen Teilbereich der Vorrichtung aus Figur 1 - 4;
- Figur 8: schematisch eine Schnittansicht durch einen Teilbereich einer Vorrichtung gemäß einer weiteren Ausführungsform;
- Figur 9: schematisch eine weitere Schnittansicht durch den Teilbereich der Vorrichtung aus Figur 8;
- Figur 10: schematisch eine Draufsicht auf einen Teilbereich einer Vorrichtung zum Halten eines Behälters in einer als Verschließvorrichtung ausgebildeten Behälterbehandlungsvorrichtung;
- Figur 11: schematisch einen Schnitt durch einen Teilbereich einer Behälterbehandlungsvorrichtung gemäß einer weiteren Ausführungsform;
- Figur 12: schematisch eine weitere Ansicht auf den Teilbereich der Behälterbehandlungsvorrichtung aus Figur 11; und
- Figur 13: schematisch einen Schnitt durch einen Teilbereich einer Behälterbehandlungsvorrichtung gemäß einer weiteren Ausführungsform.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

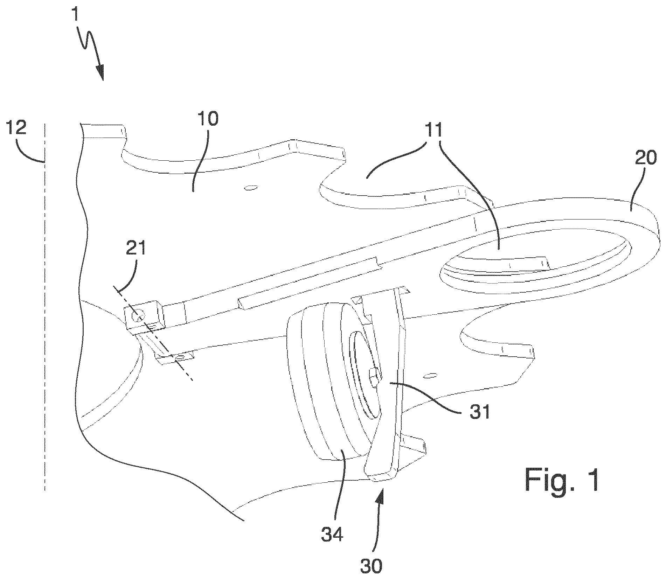

In Figur 1 ist schematisch eine perspektivische Seitenansicht von schräg unten auf einen Teilbereich einer Vorrichtung 1 zum Transportieren mindestens eines Behälters, beispielsweise zum Transportieren von Behältern in einer Getränkeabfüllanlage gezeigt. Die Vorrichtung 1 umfasst einen um eine Drehachse 12 rotierbaren Transportstern 10 mit Transporttaschen 11 zum Transportieren des mindestens einen Behälters.

Der Transportstern 10 umfasst eine relativ zu einer Transporttasche 11 bewegbare Führungseinheit 20, welche den Behälter gemeinsam mit der Transporttasche 11 in einer Führungsposition hält und welche in einer Freigabeposition den Behälter freigibt. Die Führungsposition und die Freigabeposition sind in Richtung einer Drehachse 12 des Transportsterns 10 voneinander beabstandet.

Vorliegend ist die Führungseinheit 20 um eine senkrecht zur Drehachse 12 orientierte und zur bezogen auf die Drehachse 12 vorliegenden Umfangsrichtung tangential orientierte Schwenkachse 21 schwenkbar am Transportstern 10 angeordnet.

Die Führungseinheit 20 ist in Figur 1 in ihrer Führungsposition gezeigt. Sie kann nach unten, also in Richtung der Gravitationsrichtung, bis zur Freigabeposition geschwenkt werden. Die Führungseinheit 20 weist in der Führungsposition mithin in Bezug auf eine vorgesehene Einbaulage der Vorrichtung 1 ein höheres Höhenniveau auf als in der Freigabeposition.

Die Führungseinheit 20 umfasst einen Haltering 22, der bezogen auf dessen Umfangsrichtung durchgehend ausgebildet ist, und der eingerichtet ist, in der Führungsposition den Behälter seitlich über dessen gesamten Umfang zu umgreifen beziehungsweise zu umschlingen.

Alternativ kann der Haltering 22 auch mit einer Öffnung (nicht gezeigt) ausgebildet, mithin unterbrochen ausgebildet sein, wobei er sich dann in seiner Umfangsrichtung zumindest in einem Umfangsbereich von mehr als 180°, optional mehr als 270°, erstreckt.

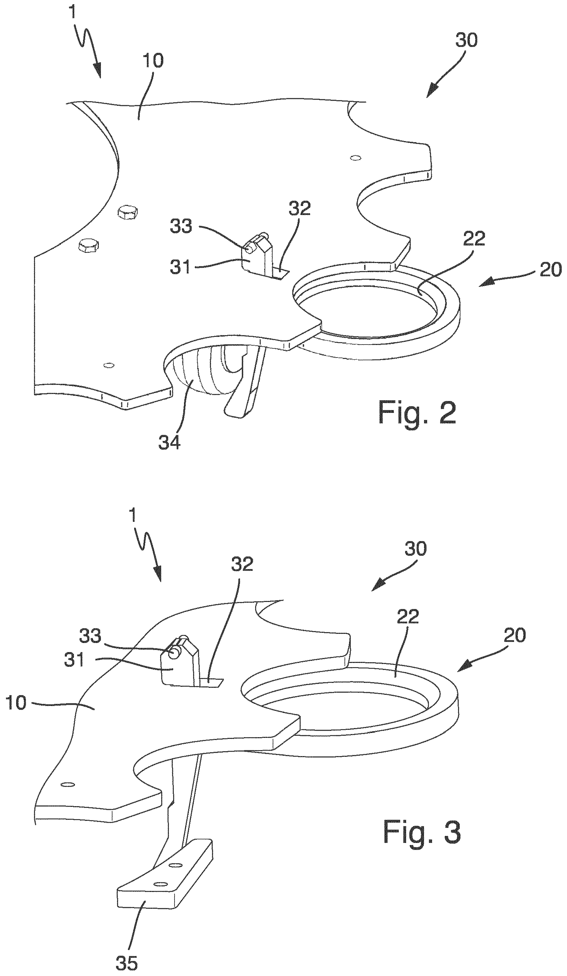

Die Führungseinheit 20 umfasst ferner einen Rastmechanismus 30 zum Fixieren der Führungseinheit 20 in der Führungsposition. Gemäß dieser optionalen Ausführung umfasst der Rastmechanismus 30 ein Rastelement 31, hier in Form eines Rasthakens, das eingerichtet ist zum Eingehen eines Formschlusses an der Oberseite einer Rastöffnung 32 (siehe Figur 2) am Transportstern 10. Das Rastelement 31 ist hier via eines nicht gezeigten Magnetelements oder Federelements optional in Richtung einer Rastposition vorgespannt, in welcher der Rasthaken in Eingriff mit der Oberseite der Rastöffnung 32 steht, wie aus Figur 2 zu erkennen, die den Detailbereich aus Figur 1 in einer perspektivischen Seitenansicht von schräg oben zeigt.

Die Vorrichtung 1 kann eine an einer vorgegebenen Stelle in Umfangsrichtung bezogen auf die Drehachse 12 angeordnete Leitkurve oder, wie hier dargestellt, Rolle 34 umfassen. Rotiert der Transportstern 10 und passiert die Führungseinheit 20 die Rolle 34, so wird die Führungseinheit 20 durch die Rolle 34 nach oben gedrückt, so dass das Rastelement 31 in die Rastposition einrastet und die Führungseinheit 20 in der Führungsposition fixiert ist, wie in den Figuren 1 und 2 dargestellt.

Der Rastmechanismus 30 ist ferner eingerichtet, durch Wechselwirkung mit einem Löseteil gelöst zu werden, wobei durch Lösen des Rastmechanismus die Führungseinheit 20 aus der Führungsposition in die Freigabeposition bewegt wird, vorliegend bedingt durch die Gravitationskraft. Wie Figur 3 zu entnehmen, welche eine weitere perspektivische Seitenansicht auf einen Detailbereich der Vorrichtung 1 aus Figur 1 und 2 zeigt, ist das Löseteil hier als Kurvenelement 35 ausgebildet, dass an einer vorgegebenen Stelle im Umfangsrichtung bezogen auf die Drehachse 12 angeordnet ist.

Alternativ oder zusätzlich kann die Führungseinheit 20 optional auf einem Teilbereich des Umfangs des Transportsterns 10 geführt sein. Sie kann auch um den gesamten Umfang herum geführt sein. Beispielsweise kann eine über den Teilbereich oder den vollen Umfang umlaufende, starr angeordnete, also nicht mitdrehende Führungskurve (nicht gezeigt), vorgesehen sein, die mit einem an der Führungseinheit 20 angeordneten Element (nicht gezeigt), beispielsweise einem Gleitelement oder einer Rolle, bei Rotation der Führungseinheit 20 im Bereich der Führungskurve in Eingriff gelangen kann. Die Position der Führungseinheit 20 kann mithin durch die Form der Führungskurve, über die das Element gleitet, beziehungsweise abrollt, vorgegeben werden. Durch eine Anhebung oder eine Absenkung der Führungskurve entlang der Drehachse 12 des Transportsterns 10 können die beiden Positionen der Führungseinheit 20 angefahren werden

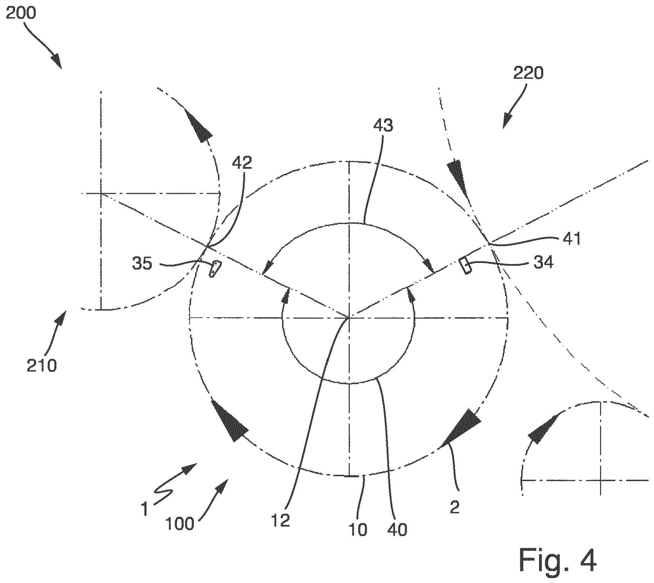

Figur 4 zeigt schematisch eine Draufsicht auf einen Teil einer Getränkeabfüllanlage 200, in der die Vorrichtung 1 gemäß der Figuren 1-3 verbaut ist. Bezogen auf die Drehachse 12 in Umfangsrichtung weist die Vorrichtung 1 einen Transportabschnitt 40 auf, der sich von einen Behältereinlauf 41, an welchem Behälter durch die Vorrichtung 1 angenommen werden, zu einem Behälterauslauf 42, an welchem die durch die Vorrichtung 1 transportierten Behälter wieder aus der Vorrichtung 1 ausgeschleust werden, erstreckt.

Am Behältereinlauf 41 nimmt die Vorrichtung 1 Behälter von einer in Bezug auf einen Transportpfad der Behälter in der Getränkeabfüllanlage 200 vorgelagerten Anlagenvorrichtung 220 auf. Am Behälterauslauf 42 gibt die Vorrichtung 1 die durch sie beförderten Behälter an ein in Bezug auf den Transportpfad der Behälter in der Getränkeabfüllanlage 200 nachgelagerte Anlagenvorrichtung 210 ab.

Die Rolle 34 ist in Transportrichtung 2 der Vorrichtung 1, die der Rotationsrichtung des Transportsterns 10 entspricht, direkt hinter dem Behältereinlauf 41 angeordnet. Die Führungseinheit 20 wird mithin direkt nachdem ein Behälter in eine Transporttasche 11 eingeführt wurde, nach oben in die Führungsposition geklappt, so dass der Behälter während des Transports durch die Vorrichtung 1 via der Führungseinheit 20 gehalten ist.

Das Kurvenelement 35 ist in Transportrichtung 2 der Vorrichtung 1, die der Rotationsrichtung des Transportsterns 10 entspricht, direkt vor dem Behälterauslauf 42 angeordnet. Die Führungseinheit 20 wird mithin direkt vor dem Ausschleusen eines Behälters aus der Transporttasche 11 nach unten in die Freigabeposition geschwenkt, so dass der Behälter ungehindert ausgeschleust werden kann.

Die Vorrichtung kann optional ein hier nicht gezeigtes Vorspannteil zum Vorspannen der Führungseinheit 20 in eine vorgegebene Position, beispielsweise in die Führungsposition oder die Freigabeposition, umfassen.

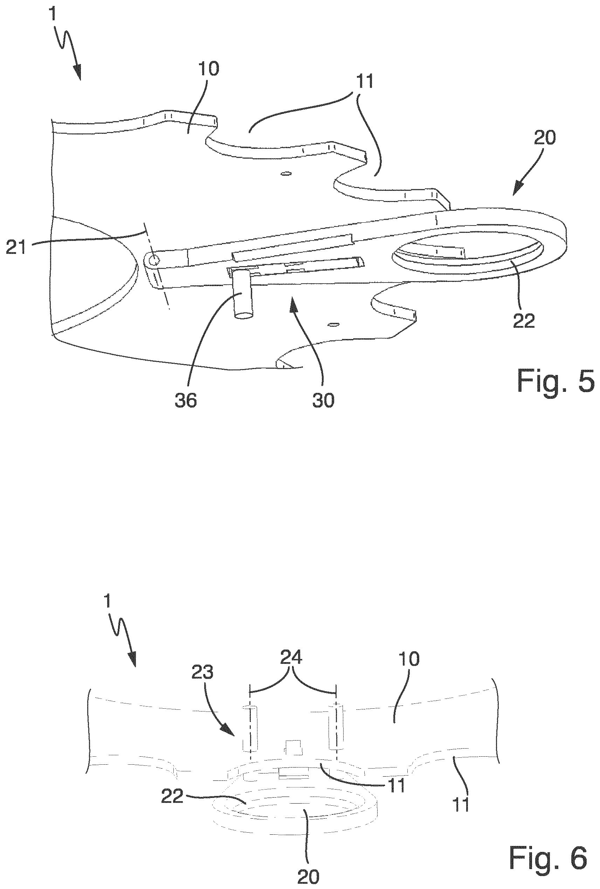

Figur 5 zeigt schematisch eine perspektivische Seitenansicht auf eine Vorrichtung 1 gemäß einer weiteren Ausführungsform, welche im Wesentlichen jener aus Figur 1-4 entspricht. Der Rastmechanismus 30 umfasst hier jedoch eine Schieberaste 36.

Figur 6 zeigt schematisch eine perspektivische Seitenansicht auf eine Vorrichtung 1 gemäß einer weiteren Ausführungsform, welche im Wesentlichen jener aus Figur 1-4 entspricht. Die Führungseinheit 20 ist hier anders als in den vorherigen Ausführungsformen in einer parallel zur Drehachse 12 orientierten Verschieberichtung 24 relativ zum Transportstern 10 verschiebbar am Transportstern 10 gelagert.

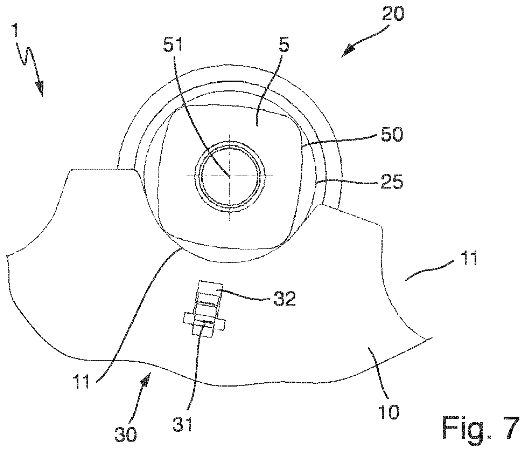

Figur 7 zeigt schematisch eine Draufsicht in Richtung der Drehachse 12 auf einen Teilbereich der Vorrichtung 1 aus Figur 1-4. In einer Tasche 11 ist ein Behälter 5 angedeutet. Dieser weist im Querschnitt senkrecht zu seiner Längsachse 51 eine unrunde Profilform 50 auf. Der Behälter 5 stellt eine sogenannte Formflasche dar. Der Behälter 5 weist eine im Wesentlichen quadratische Profilform 50 mit abgerundeten Ecken auf. Mittels des Bezugszeichens 25 ist der minimale Innendurchmesser der Innenkontur des Halterings 22 gekennzeichnet. Zu erkennen ist, dass der Innendurchmesser der Innenkontur 25 beziehungsweise die Innenkontur 25 des Halterings 22 an die maximale Erstreckung der Profilform 50 senkrecht zur Längsrichtung 51 angepasst ist. Dadurch ist der Behälter 5 durch die Führungseinheit 20 sicher gehalten und positioniert, wenn sich die Führungseinheit 20 in der Führungsposition befindet.

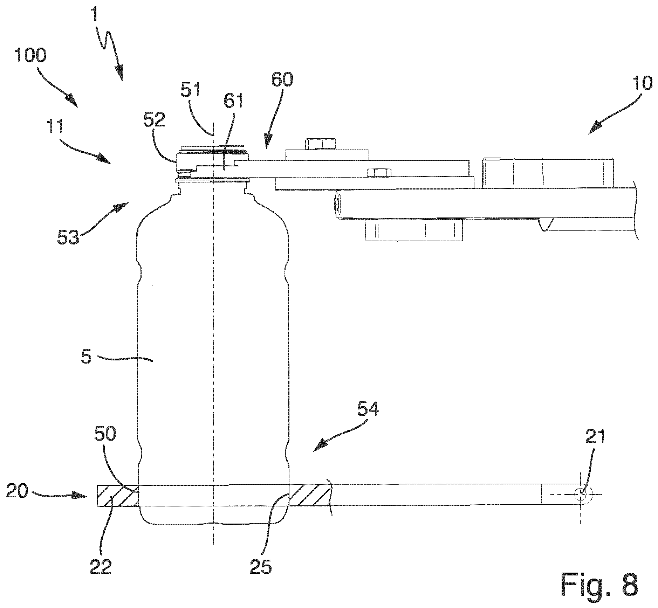

Figur 8 zeigt schematisch eine Schnittansicht durch einen Teilbereich einer Vorrichtung 1 gemäß einer weiteren Ausführungsform. Bei dieser umfasst der Transportstern 10 Haltevorrichtungen 60 zum Halten eines zu transportierenden Behälters 5 an einer oberen Seite 53 des Behälters 5, hier an seinem Halsbereich 52, wobei je eine Haltevorrichtung 60 je einer Transporttasche 11 zugeordnet ist. Die Haltevorrichtung 60 umfasst zwei gegengleich zueinander schwenkbare Klammerarme 61, die den Behälter 5 am Halsbereich 52 aktiv greifen. Der Behältertransport erfolgt hier mithin im sogenannten "Neckhandling".

Die die Führungseinheit 20 ist wiederum ausgebildet zum Halten des Behälters 5 an einer unteren Seite 54 des Behälters 5, anders ausgedrückt an dessen Flaschenrumpf. In Figur 8 liegt die Führungseinheit 20 in ihrer Führungsposition vor. Sie hält den Behälter 5 entsprechend, beziehungsweise stützt diesen an seiner seitlichen Außenwand, wobei die Innenkontur 25 des Halterings 22 an die Profilform 51 des Behälters 5 angepasst ist.

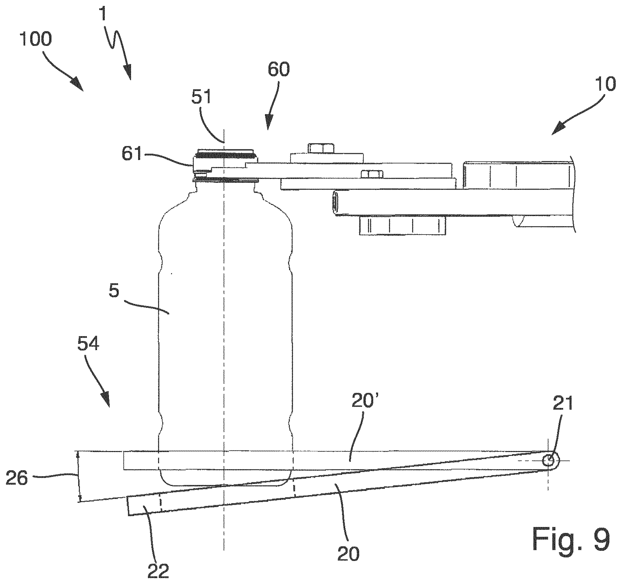

Figur 9 zeigt eine weitere Schnittansicht durch den Teilbereich der Vorrichtung 1 aus Figur 8, wobei hier die Führungseinheit 20 über ihre Schwenkachse 21 von der Führungsposition in die Freigabeposition geschwenkt gezeigt ist. Hierzu ist die Führungseinheit 20 um einen vorgegebenen Schwenkwinkel 26 aus ihrer horizontalen Lage in der Führungsposition nach unten (also in Gravitationsrichtung) geschwenkt. Mittels des Bezugszeichens 20' ist die Führungseinheit in ihrer Führungsposition angedeutet.

Die Vorrichtung 1 der Figuren 8 und 9 kann beispielsweise Teil einer Behälterbehandlungsvorrichtung 100, beispielsweise in einer Abfüllanlage, beispielsweise einer Getränkeabfüllanlage 200, sein. Die Behälterbehandlungsvorrichtung 100 kann beispielsweise hier nicht gezeigte, oberhalb der Haltevorrichtungen 60 an dem Transportstern angeordnete Behandlungseinheiten umfassen, beispielsweise Füllvorrichtungen zum Befüllen eines Behälters 5 mit einem Getränk.

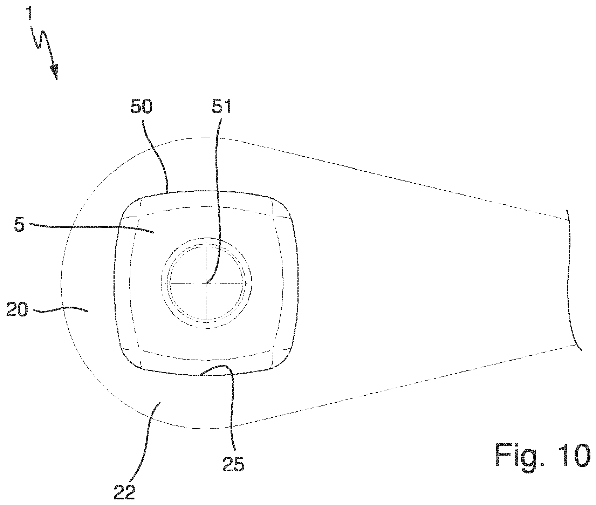

Figur 10 zeigt schematisch eine Draufsicht auf einen Teilbereich einer Vorrichtung 1 zum Halten eines Behälters 5 in einer als Verschließvorrichtung ausgebildeten Behälterbehandlungsvorrichtung 100. Die Führungseinheit 5 umfasst wieder den geschlossen ausgebildeten Haltering 22. Der Haltering 22, spezifischer seine Innenkontur 25, korrespondiert zur Profilform 50 für zumindest einen Typ an zu fördernden Behältern 5. Da der Behälter 5 ein Formbehälter mit unrunder Profilform ist, kann durch die Anpassung der Innenkontur 25 des Halterings 22 an die Profilform 50 des Behälters 5 ein Drehmoment, das auf den Behälter 5 um seine Längsachse 50 durch eine Verschließeinheit der Behälterbehandlungsvorrichtung 100 während des Aufbringens eines Verschlusses auf die Behältermündung aufgebracht wird, über die Behälterwand am Haltering 22 beziehungsweise an der Führungseinheit 20 abgestützt werden. Dadurch sind bei herkömmlichen Verschließern aus dem Stand der Technik erforderliche aufwändige Ausführungen mit Bremsbackenstern und/oder Riemenklemmung nicht erforderlich. Letztgenannte können durch die Führungseinheit 20 ersetzt werden beziehungsweise deren Funktion in signifikant einfacherer Bauart alternativ durch die Führungseinheit 20 dargestellt werden.

Aufgrund des Vorsehens der Führungseinheit 20 kann auf eine zusätzliche Behälterführung, die beispielsweise radial außerhalb der Tasche 11 in Umfangsrichtung starr (also nicht drehbar) anzuordnen wäre, verzichtet werden. Denn die Führungseinheit 20 gewährleistet die sichere Positionierung und Orientierung des Behälters 5 in seiner für den Transport vorgesehenen Position und Orientierung.

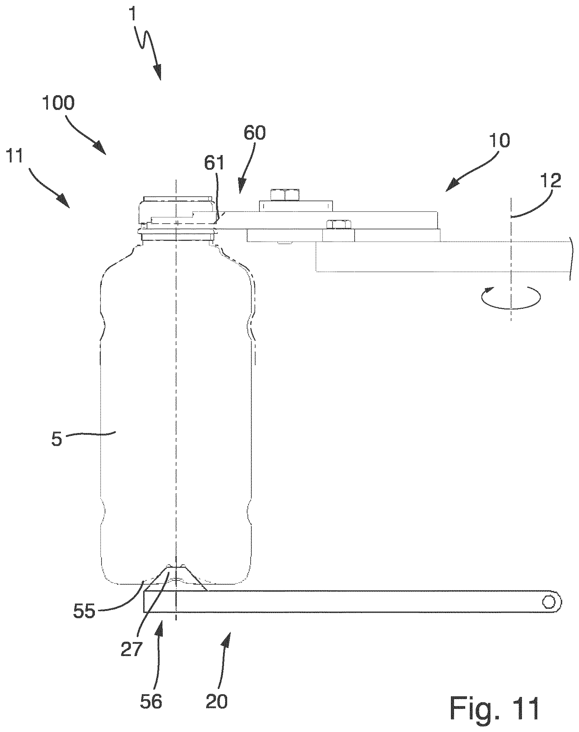

Figur 11 zeigt schematisch einen Schnitt durch einen Teilbereich einer Behälterbehandlungsvorrichtung 100 gemäß einer weiteren Ausführungsform. Diese umfasst eine Vorrichtung 1, die im Wesentlichen jener aus den Figuren 8 und 9 entspricht. Anstelle des Halterings 22 umfasst die Führungseinheit 20 hier einen sich in Richtung der Drehachse 12 (also in einer Richtung, die im Wesentlichen parallel zur Drehachse 12 orientiert ist) erstreckenden Nocken 27. Der Nocken 27 ist eingerichtet, in der Führungsposition, wie in Figur 11 gezeigt, in eine Einbuchtung 55 an der Unterseite beziehungsweise dem Boden 56 des in der Haltevorrichtung 60 gehaltenen Behälters 5 einzugreifen, um so den Behälter 5 zu halten. Der Nocken 27 kann optional korrespondierend zu einer Form der Einbuchtung 55 ausgebildet sein. Der Nocken 27 stützt den Behälter 5 analog zum Haltering 22 radial, so dass der Behälter 5 in der vorgesehenen Lage und Orientierung gehalten ist.

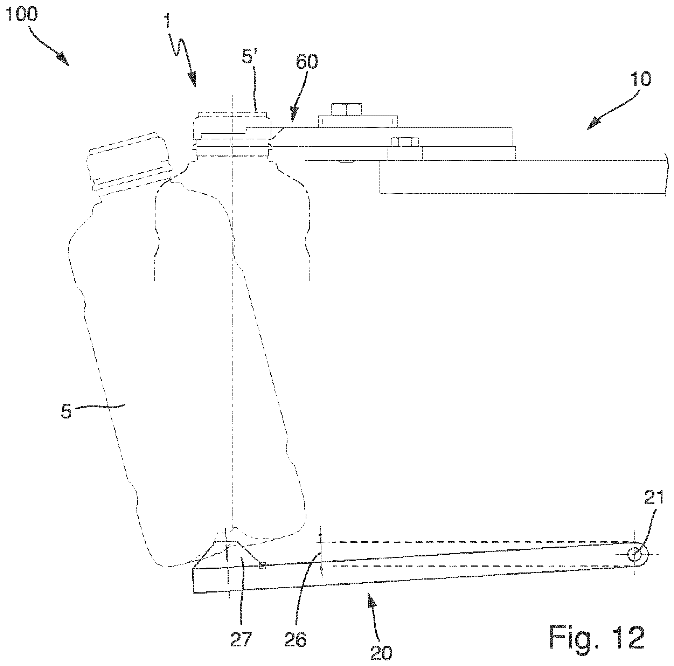

Figur 12 zeigt den Teilbereich der Behälterbehandlungsvorrichtung 100 aus Figur 11, wobei die Führungseinheit 20 aus der Führungsposition um einen vorgegebenen Schwenkwinkel 26 um die Schwenkachse 21 in die Freigabeposition geschwenkt wurde.

Diese Ausführungsform kann beispielsweise besonders vorteilhaft sein für Anwendungen, bei welchen während der Übergabe ein Ausschwenken gefüllter Flaschen vorgesehen ist. Durch das Vorsehen der Führungseinheit 20 kann auf eine ansonsten, wie bei Vorrichtungen aus dem Stand der Technik der Fall, erforderliche aufwendige Umführungen/Führungsbögen am Füllerauslaufstern verzichtet werden. Ein Ausschleusen der Behälter ist durch Vorsehen der Führungseinheit 20 prozesssicher möglich.

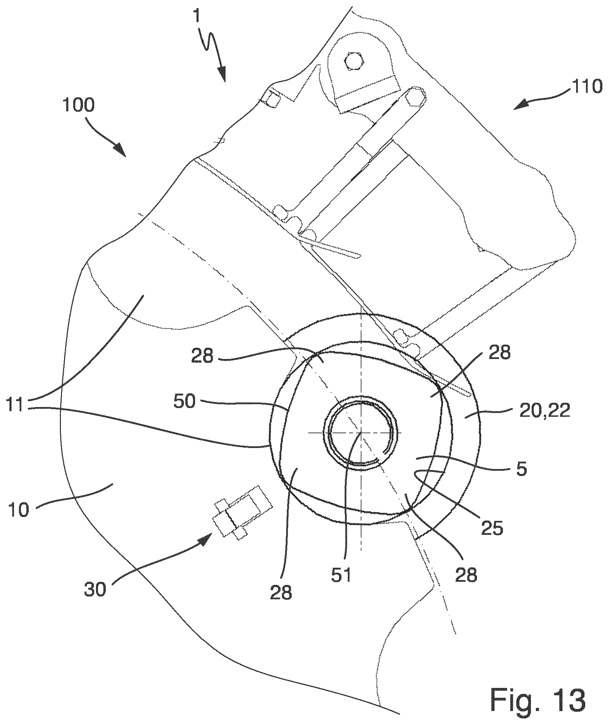

Figur 13 zeigt schematisch einen Schnitt durch einen Teilbereich einer Behälterbehandlungsvorrichtung 100 gemäß einer weiteren Ausführungsform, welche als Ausrichtstern ausgebildet ist.

Die Behälterbehandlungsvorrichtung 100 umfasst eine Behälterbehandlungseinheit 110, die zum Ausrichten der Behälter 5, hier Formflaschen mit unrunder Profilform 50, in eine vorgegebene Winkelposition relativ zu ihrer Längsrichtung 51 ausgebildet ist. Die Behälterbehandlungseinheit 110 ist drehfest (also nicht mit dem Transportstern 10 mitdrehend) radial außerhalb des Transportsterns 10 angeordnet.

Die Führungseinheit 20 umfasst einen Haltering 22, dessen Innenkontur 25 kreisrund ausgebildet ist, wobei der Durchmesser der Innenkontur 25 der maximalen Erstreckung des Behälters 5 senkrecht zur Längsachse 51 entspricht. Dadurch ist verhindert, dass sich der durch die Führungseinheit 20 in der Führungsposition gehaltene Behälter 5 verkanten kann. Denn die Innenkontur 25 steht an vier Kontaktstellen 28 mit dem Behälter 5 in Kontakt. Aufgrund der kreisrunden Ausbildung der Innenkontur 25 des Halterings 22 kann sich der Behälter 5 um seine Längsachse 51 in der Führungseinheit 20 drehen. So kann via der Behälterbehandlungseinheit 110 der Behälter 5 in die vorgesehene Ausrichtung gebracht werden.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 1: Vorrichtung
- 2: Transportrichtung

- 10: Transportstern
- 11: Transporttasche
- 12: Drehachse
- 20: Führungseinheit
- 21: Schwenkachse
- 22: Haltering
- 24: Verschieberichtung
- 25: Innenkontur
- 26: Schwenkwinkel
- 27: Nocken

- 30: Rastmechanismus
- 31: Rastelement
- 32: Rastöffnung
- 34: Rolle
- 35: Kurvenelement
- 36: Schieberaste

- 40: Transportabschnitt
- 41: Behältereinlauf
- 42: Behälterauslauf

- 5: Behälter
- 50: Profilform
- 51: Längsachse
- 52: Halsbereich
- 53: Obere Seite
- 54: Untere Seite
- 55: Einbuchtung
- 56: Boden

- 60: Haltevorrichtung
- 61: Klammerarm

- 100: Behälterbehandlungsvorrichtung
- 110: Behälterbehandlungseinheit
- 200: Getränkeabfüllanlage
- 210: nachgelagerte Anlagenvorrichtung
- 220: vorgelagerte Anlagenvorrichtung

## Patentansprüche

1. Vorrichtung (1) zum Transportieren mindestens eines Behälters (5), beispielsweise zum Transportieren von Behältern (5) in einer Getränkeabfüllanlage (200), umfassend einen rotierenden Transportstern (10) mit Transporttaschen (11) zum Transportieren des mindestens einen Behälters (5),
**dadurch gekennzeichnet, dass**
der rotierende Transportstern (11) zumindest eine relativ zu einer Transporttasche (11) bewegbare Führungseinheit (20) umfasst, welche den Behälter (5) gemeinsam mit den Transporttaschen (11) in einer Führungsposition hält und welche in einer Freigabeposition den Behälter (5) freigibt, wobei die Führungsposition und die Freigabeposition in Richtung einer Drehachse (12) des Transportsterns (10) voneinander beabstandet sind.

2. Vorrichtung (1) nach Anspruch 1, **dadurch gekennzeichnet, dass** die Führungseinheit (20) in der Führungsposition den Behälter (5) zumindest in einem Umfangsbereich von mehr als 180° umfasst, optional mehr als 270°, oder optional den Behälter (5) vollständig umschlingt.

3. Vorrichtung (1) gemäß Anspruch 1 oder 2, **dadurch gekennzeichnet, dass** die Führungseinheit (20) einen Haltering (22) umfasst, der eingerichtet ist, in der Führungsposition den Behälter (5) zumindest teilweise seitlich zu umgreifen, wobei der Haltering (22) optional korrespondierend zu einer Profilform (50) für zumindest einen Typ an zu fördernden Behältern (5) ausgebildet ist.

4. Vorrichtung (1) gemäß dem vorstehenden Anspruch, **dadurch gekennzeichnet, dass** der Haltering (22) sich in seiner Umfangsrichtung zumindest in einem Umfangsbereich von mehr als 180° erstreckt, optional mehr als 270°, oder durchgehend ausgebildet ist.

5. Vorrichtung (1) gemäß einem der vorstehenden Ansprüche, **dadurch gekennzeichnet, dass** die Führungseinheit (20) zum Halten des Behälters (5) in der Führungsposition an einer unteren Seite (54) des Behälters (5) ausgebildet ist.

6. Vorrichtung (1) gemäß einem der vorstehenden Ansprüche, **dadurch gekennzeichnet, dass** die Führungseinheit (20) in der Führungsposition in Bezug auf eine vorgesehene Einbaulage der Vorrichtung (1) ein höheres Höhenniveau aufweist als in der Freigabeposition.

7. Vorrichtung (1) gemäß einem der vorstehenden Ansprüche, **dadurch gekennzeichnet, dass** die Führungseinheit (20) einen sich in Richtung der Drehachse (12) erstreckenden Nocken (27) umfasst, der eingerichtet ist, in der Führungsposition in eine Einbuchtung (55) an der Unterseite (56) des Behälters (5) einzugreifen, um so den Behälter (5) zu halten, wobei der Nocken (27) optional korrespondierend zu einer Form der Einbuchtung (55) für zumindest einen Typ an zu fördernden Behältern (5) ausgebildet ist.

8. Vorrichtung (1) gemäß einem der vorstehenden Ansprüche, **dadurch gekennzeichnet, dass** die Führungseinheit (20) am Transportstern (10) schwenkbar angeordnet ist und/oder verschiebbar angeordnet ist.

9. Vorrichtung (1) gemäß einem der vorstehenden Ansprüche, **dadurch gekennzeichnet, dass** die Führungseinheit (20) einen Rastmechanismus (30) zum Fixieren der Führungseinheit (20) in der Führungsposition umfasst, wobei der Rastmechanismus (30) optional ein Rastelement (31), beispielsweise einen Rasthaken, einen Rastbolzen oder eine Schieberaste (36), zum Eingehen eines Formschlusses umfasst, wobei das Rastelement (31) optional in Richtung einer Rastposition vorgespannt ist, beispielweise über eine Feder oder ein Magnetelement, und/oder der Rastmechanismus (30) ein Magnetelement umfasst.

10. Vorrichtung (1) gemäß einem der vorstehenden Ansprüche, **dadurch gekennzeichnet, dass** die Führungseinheit (20) auf einem Teilbereich des Umfangs des Transportsterns (10) oder um den gesamten Umfang herum geführt ist, wobei optional eine über den Teilbereich oder den gesamten Umfang herum umlaufende Führungskurve vorgesehen ist, die mit einem an der Führungseinheit (20) angeordneten Element, beispielsweise einem Gleitelement oder einer Rolle, bei Rotation der Führungseinheit (20) im Bereich der Führungskurve in Eingriff gelangt, derart, dass die Position der Führungseinheit (20) durch die Führungskurve vorgegeben wird.

11. Vorrichtung (1) gemäß dem vorstehenden Anspruch, **dadurch gekennzeichnet, dass** der Rastmechanismus (30) eingerichtet ist, durch Wechselwirkung mit einem Löseteil, beispielsweise ein Kurvenelement (35), gelöst zu werden, wobei durch Lösen des Rastmechanismus (30) die Führungseinheit (20) aus der Führungsposition in die Freigabeposition bewegbar ist, beispielsweise bedingt und/oder unterstützt durch die Gravitationskraft.

12. Vorrichtung (1) gemäß dem vorstehenden Anspruch, **dadurch gekennzeichnet, dass** die Führungseinheit (20) ein Vorspannteil zum Vorspannen der Führungseinheit (20) in eine vorgegebene Position, beispielsweise in die Führungsposition oder die Freigabeposition, umfasst.

13. Vorrichtung (1) gemäß einem der vorstehenden Ansprüche, **dadurch gekennzeichnet, dass** der Transportstern (10) Haltevorrichtungen (60) zum Halten eines zu transportierenden Behälters (5) an einer oberen Seite (53) des Behälters (5), beispielsweise an seinem Halsbereich (52), umfasst, wobei optional je eine Haltevorrichtung (60) je einer Transporttasche (11) zugeordnet ist.

14. Behälterbehandlungsvorrichtung (100), beispielsweise in einer Abfüllanlage, beispielsweise einer Getränkeabfüllanlage (200), umfassend zumindest eine Behälterbehandlungseinheit (110) und eine Vorrichtung (1) gemäß einem der vorstehenden Ansprüche.

15. Behälterbehandlungsvorrichtung (100) nach Anspruch 14, **dadurch gekennzeichnet, dass** zumindest eine Behälterbehandlungseinheit (110) zum Füllen und/oder Verschließen eines Behälters (5) ausgebildet ist oder die Behälterbehandlungseinheit (110) zum Ausrichten der Behälter (5) in eine vorgegebene Position um ihre Längsrichtung (51) ausgebildet ist.
